(19) Europäisches Patentamt
European Patent Office
Office européen des brevets

(11) **EP 4 046 819 B1**

(12) **EUROPEAN PATENT SPECIFICATION**

(45) Date of publication and mention of the grant of the patent:
**25.03.2026 Bulletin 2026/13**

(21) Application number: **20880089.6**

(22) Date of filing: **09.07.2020**

(51) International Patent Classification (IPC):
*B60C 1/00* *(2006.01)*       *C08L 21/00* *(2006.01)*
*C08L 25/00* *(2006.01)*       *C08L 57/00* *(2006.01)*
*C08L 61/04* *(2006.01)*       *C08L 91/00* *(2006.01)*

(52) Cooperative Patent Classification (CPC):
(C-Sets available)
**C08L 91/00; B60C 1/0016; B60C 11/005;
C08C 19/02; C08C 19/22; C08C 19/25;
C08C 19/44; C08F 236/10; C08K 9/08; C08L 61/06;
C08L 91/06; C08L 91/08;** B60C 2009/2247;
B60C 2011/0025; B60C 2011/0033;       (Cont.)

(86) International application number:
**PCT/JP2020/026793**

(87) International publication number:
**WO 2021/079564 (29.04.2021 Gazette 2021/17)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2019 JP 2019192747**

(43) Date of publication of application:
**24.08.2022 Bulletin 2022/34**

(73) Proprietor: **Sumitomo Rubber Industries, Ltd.
Kobe-shi, Hyogo 651-0072 (JP)**

(72) Inventors:
• **KITAGO, Ryota
Kobe-shi, Hyogo 651-0072 (JP)**
• **SATO, Daisuke
Kobe-shi, Hyogo 651-0072 (JP)**

• **YOSHIYASU, Hayato
Kobe-shi, Hyogo 651-0072 (JP)**
• **TAKEUCHI, Akihiro
Kobe-shi, Hyogo 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 1 568 735       EP-A1- 3 255 092
WO-A1-2017/065299       WO-A1-2020/162304
JP-A- 2003 253 051       JP-A- 2010 053 282
JP-A- 2012 111 888       JP-A- 2012 136 659
JP-A- 2017 075 286       JP-A- 2019 112 598
JP-A- 2020 059 775       JP-A- S60 185 601**

(52)  Cooperative Patent Classification (CPC): (Cont.)
C08L 25/16; Y02T 10/86

C-Sets
**C08F 236/10, C08F 4/48;**
**C08L 15/00, C08L 91/00, C08L 9/06, C08L 25/16,**
**C08L 91/06, C08K 3/04, C08K 3/36, C08K 5/548,**
**C08K 5/18, C08K 5/09, C08K 3/22, C08K 3/06,**
**C08K 5/40, C08K 5/31, C08K 5/47;**

**C08L 15/00, C08L 91/00, C08L 15/00, C08L 25/16,**
**C08L 91/06, C08K 3/04, C08K 3/36, C08K 5/548,**
**C08K 5/18, C08K 5/09, C08K 3/22, C08K 3/06,**
**C08K 5/40, C08K 5/31, C08K 5/47;**
**C08L 15/00, C08L 91/00, C08L 57/02, C08L 25/16,**
**C08L 91/06, C08K 3/04, C08K 3/36, C08K 5/548,**
**C08K 5/18, C08K 5/09, C08K 3/22, C08K 3/06,**
**C08K 5/40, C08K 5/31, C08K 5/47;**
C08F 236/06, C08F 212/08

**Description**

TECHNICAL FIELD

The present disclosure relates to a tire.

BACKGROUND ART

As the life of tires has been extended, there has been an increasing need for tires that have enduring performance from immediately after the production to the end of running life of the tires. To meet such market demand, it may be contemplated to enhance enduring performance by previously cleaving the double bonds of rubber molecules via hydrogenation to reduce the recrosslinking of the polymer due to heat during service of the tire. Examples of such hydrogenated polymers are disclosed in Patent Literature 1, for example.

However, the use of such polymers may reduce the efficiency of the vulcanization reactions in rubber compositions, and thus an excessive amount of sulfur needs to be added to their remaining double bonds in tire production. There is room for improvement in that the excessive amount of sulfur can cause recrosslinking reactions during running to impair enduring performance.

CITATION LIST

Patent Literature

Patent Literature 1: WO 2016/039005

SUMMARY OF DISCLOSURE

TECHNICAL PROBLEM

The present disclosure aims to solve the above problem and provide a tire having excellent enduring performance.

SOLUTION TO PROBLEM

The present disclosure relates to a tire, including a tread containing a rubber composition, the rubber composition satisfying the following relationships 1) to 3) when measured within 180 days after vulcanization:

$$1) \quad Hso/Hsa \times 100 \geq 95$$

wherein Hso: hardness at room temperature,
Hsa: hardness at room temperature after heat treatment at 80°C for 168 hours, when Hso and Hsa are measured in accordance with JIS K6253-3 (2012) "Rubber, vulcanized or thermoplastic -Determination of hardness- Part 3: Durometer method" using a type A durometer;

$$2) \quad As/Ts \times 100 \leq 70$$

wherein Ts: sulfur content before acetone extraction,
As: sulfur content after acetone extraction, when As and Ts are measured in accordance with JIS K6233:2016, wherein the acetone extraction is carried out as described in section (sulfur content) of the specification; and

$$3) \quad Swell \leq 330$$

wherein Swell: toluene swelling index, when Swell is a volume change before and after immersion of a specimen in toluene at 25°C for 24 hours, wherein the specimen is cut from the tread.

Preferably, the rubber composition contains at least one plasticizer having an iodine value of 100 to 150 g/100 g as measured in accordance with JIS K6235-2006, and the rubber composition contains, per 100 parts by mass of at least one rubber component therein, 2 to 20 parts by mass of the at least one plasticizer.

Preferably, the plasticizer is at least one liquid resin selected from the group consisting of C5/C9 resins, terpene resins, phenol resins, and aromatic vinyl polymers.

Preferably, the rubber composition contains, based on 100% by mass of at least one rubber component therein, at least 75% by mass of at least one multi-component copolymer containing a conjugated diene unit, a non-conjugated olefin unit, and an aromatic vinyl unit, and the multi-component copolymer has a non-conjugated olefin unit content of higher than 65 mol% but lower than 95 mol% and an aromatic vinyl unit content of 4 mol% or higher.

Preferably, the multi-component copolymer has a weight average molecular weight of 100,000 to 2,000,000.

Preferably, the rubber composition contains at least one solid resin, and the rubber composition contains, per 100 parts by mass of at least one rubber component therein, 5 to 30 parts by mass of the at least one solid resin.

Preferably, the rubber composition contains at least one carbon black, and the rubber composition contains, per 100 parts by mass of at least one rubber component therein, 10 to 50 parts by mass of the at least one carbon black.

Preferably, the carbon black includes a high structure carbon black having a dibutyl phthalate oil absorption of 250 ml/100 g or more and a nitrogen adsorption specific surface area of 350 $m^2$/g or more.

Preferably, the tire includes a carcass, a belt disposed radially outward of the carcass, and a belt-reinforcing layer disposed radially outward of the belt; the tread is disposed radially outward of the belt-reinforcing layer; the tread has a multi-layer structure including a base tread and a cap tread that contains the rubber composition; the cap tread has two or more circumferential grooves and a plurality of land portions defined by the circumferential grooves; the tire satisfies the following relationship 4) in a center land portion that is closest to a tire equator among the land portions:

$$4) \quad 0.30 \leq (t0 - t1)/t0 \leq 0.40$$

wherein t0 denotes a thickness from the belt-reinforcing layer to an outer surface of the center land portion, and t1 denotes a thickness of a rubber layer that forms the cap tread; and the tire satisfies the following relationship 5) in a bottom portion that is a deepest part of the circumferential grooves:

$$5) \quad 0.50 \leq t3/t2 \leq 1.00$$

wherein t2 denotes a thickness from the belt-reinforcing layer to an outer surface of the bottom portion, and t3 denotes a thickness of a rubber layer that forms the cap tread.

ADVANTAGEOUS EFFECTS OF DISCLOSURE

The present disclosure provides a tire including a tread containing a rubber composition that satisfies relationships 1) to 3) when measured within 180 days after vulcanization. Such a tire provides excellent enduring performance.

BRIEF DESCRIPTION OF DRAWINGS

Fig. 1 is a schematic cross-sectional view showing an example of a tire.
Fig. 2 is a detail view in the vicinity of the tread shown in Fig. 1.

DESCRIPTION OF EMBODIMENTS

The tire of the present disclosure includes a tread containing a rubber composition that satisfies the following relationships 1) to 3) when measured within 180 days after vulcanization:

$$1) \quad Hso/Hsa \times 100 \geq 95$$

wherein Hso: hardness at room temperature,
Hsa: hardness at room temperature after heat treatment at 80°C for 168 hours;

$$2) \quad As/Ts \times 100 \leq 70$$

wherein Ts: sulfur content before acetone extraction,
As: sulfur content after acetone extraction; and

$$3) \quad Swell \leq 330$$

wherein Swell: toluene swelling index.

As a result of studies conducted by the present inventors, it has been found that excellent enduring performance can be achieved by using in a tread a rubber composition that satisfies relationships 1) to 3) when measured within 180 days after vulcanization.

It is considered that the rubber composition exhibits a slight deterioration in performance due to heat by satisfying relationship 1), has a small amount of sulfur not contributing to crosslinking by satisfying relationship 2), and possesses a high crosslink density by satisfying relationship 3). Thus, because of these factors, it is believed that a tire containing the rubber composition provides excellent enduring performance.

The purpose of the present disclosure, i.e., the problem to be solved by the present disclosure, is to provide excellent enduring performance. Thus, a solution to this problem is to adjust so that relationships 1) to 3) are satisfied when measured within 180 days after vulcanization.

It is sufficient that the value of "Hso/Hsa × 100" in relationship 1) be 95 or more. The value is preferably 95.5 or more, more preferably 96 or more, still more preferably 96.5 or more. The upper limit is not limited. When the value is within the range indicated above, the advantageous effect tends to be better achieved.

Hso and Hsa can be measured as described later in EXAMPLES.

Hso may be appropriately adjusted to a range that satisfies relationship 1). However, Hso is preferably 65 or less, more preferably 55 or less, but is preferably 48 or more, more preferably 51 or more. Likewise, Hsa is preferably 66 or less, more preferably 56 or less, but is preferably 50 or more, more preferably 53 or more. When they are within the respective ranges indicated above, the advantageous effect tends to be better achieved.

Hso and Hsa may be adjusted by any method. Hso may be increased, for example, by increasing the amount of reinforcing agents, reducing the amount of softeners, increasing the amount of sulfur, or increasing the amount of vulcanization accelerators, whereas Hso may be reduced, for example, by reducing the amount of reinforcing agents, increasing the amount of softeners, reducing the amount of sulfur, or reducing the amount of vulcanization accelerators. Hsa may be reduced, for example, by using a (co)polymer containing a small amount of conjugated diene units as a rubber component, or reducing Hso, or by reducing the amount of sulfur while increasing the amount of vulcanization accelerators, or by increasing the amounts of zinc oxide and stearic acid, or incorporating a plasticizer having an iodine value of 100 to 150 g/100 g, or increasing the calories (longer duration/higher temperature) given during vulcanization, whereas Hsa may be increased, for example, by increasing Hso, or by increasing the amount of sulfur while reducing the amount of vulcanization accelerators, or by reducing the amounts of zinc oxide and stearic acid, or reducing the calories given during vulcanization.

It is sufficient that the value of "As/Ts × 100" in relationship 2) be 70 or less. The value is preferably 69 or less, more preferably 68 or less, but is preferably 50 or more, more preferably 60 or more, still more preferably 63 or more. When the value is within the range indicated above, the advantageous effect tends to be better achieved.

Ts and As can be measured as described later in EXAMPLES.

Ts may be appropriately adjusted to a range that satisfies relationship 2). However, Ts is preferably 1.25% by mass or less, more preferably 1.15% by mass or less, but is preferably 0.98% by mass or more, more preferably 1.02% by mass or more. Likewise, As is preferably 1.0% by mass or less, more preferably 0.9% by mass or less, but is preferably 0.5% by mass or more, more preferably 0.7% by mass or more. When they are within the respective ranges indicated above, the advantageous effect tends to be better achieved.

Ts and As may be adjusted by any method. Ts may be increased, for example, by increasing the content of sulfur atom-containing chemicals, such as sulfur, vulcanization accelerators, or silane coupling agents, whereas Ts may be reduced, for example, by reducing the content of sulfur atom-containing chemicals. As may be increased, for example, by incorporating a plasticizer having an iodine value of 100 to 150 g/100 g.

It is sufficient that Swell in relationship 3) be 330 or less. However, Swell is preferably 310 or less, more preferably 300 or less, still more preferably 298 or less, but is preferably 270 or more, more preferably 278 or more, still more preferably 290 or more. When Swell is 330 or less, the rubber tends to be sufficiently crosslinked, resulting in good abrasion resistance. When Swell is 270 or more, the crosslinked rubber tends to have good flexibility so that a deterioration in abrasion resistance due to brittle fracture is less likely to occur.

Swell can be measured as described later in EXAMPLES.

Swell may be adjusted by any method. Swell may be increased, for example, by reducing the amount of sulfur and vulcanization accelerators, increasing the amount of softeners, reducing the amount of reinforcing agents, increasing the amount of plasticizers, or using a plasticizer having an increased iodine value, whereas Swell may be reduced, for example, by increasing the amount of sulfur and vulcanization accelerators, reducing the amount of softeners, increasing the amount of reinforcing agents, reducing the amount of plasticizers, or using a plasticizer having a reduced iodine value.

The rubber component(s) of the rubber composition preferably includes one or more multi-component copolymers containing a conjugated diene unit, a non-conjugated olefin unit, and an aromatic vinyl unit.

The conjugated diene unit in the multi-component copolymers is a structural unit derived from a conjugated diene compound. Examples of the conjugated diene compound include 1,3-butadiene, isoprene, 1,3-pentadiene, 2,3-dimethylbutadiene, 2-phenyl-1,3-butadiene, and 1,3-hexadiene. These may be used alone or in combinations of two or more. Preferred is 1,3-butadiene or isoprene, with 1,3-butadiene being more preferred.

The non-conjugated olefin unit in the multi-component copolymers is a structural unit derived from a non-conjugated olefin. Examples of the non-conjugated olefin include ethylene, propylene, 1-butene, 1-pentene, 1-hexene, 1-heptene, and 1-octene. These may be used alone or in combinations of two or more. Ethylene, propylene, and 1-butene are preferred, and ethylene is more preferred.

The aromatic vinyl unit in the multi-component copolymers is a structural unit derived from an aromatic vinyl compound. Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Styrene or $\alpha$-methylstyrene is preferred, and styrene is more preferred.

For example, the multi-component copolymers may be prepared by copolymerizing a conjugated diene compound, a non-conjugated olefin, and an aromatic vinyl compound, or by copolymerizing a conjugated diene compound and an aromatic vinyl compound or copolymerizing a conjugated diene compound, a non-conjugated olefin, and an aromatic vinyl compound, and then hydrogenating the copolymer to convert some conjugated diene units to non-conjugated olefin units. In other words, the multi-component copolymers may be copolymers of a conjugated diene compound, a non-conjugated olefin, and an aromatic vinyl compound, or may be hydrogenated products (hydrogenated copolymers) of copolymers of a conjugated diene compound and an aromatic vinyl compound or copolymers of a conjugated diene compound, a non-conjugated olefin, and an aromatic vinyl compound. Each of these may be used alone, or two or more of these may be used in combination. Preferred among these are hydrogenated products of copolymers of a conjugated diene compound and an aromatic vinyl compound, with hydrogenated styrene-butadiene copolymers (hydrogenated SBR) being more preferred.

The multi-component copolymers may be prepared by any polymerization method, including random polymerization and block polymerization, with random polymerization being preferred.

When the multi-component copolymers are hydrogenated copolymers, the hydrogenation may be performed using any method and any reaction condition, including known methods and known conditions. Usually, the hydrogenation is performed at 20 to 150°C under an elevated hydrogen pressure of 0.1 to 10 MPa in the presence of a hydrogenation catalyst. Other methods and conditions related to production processes are not limited either, and those described in WO 2016/039005 above may be used.

When the multi-component copolymers are hydrogenated copolymers, the degree of hydrogenation based on the total conjugated diene units before hydrogenation (= 100 mol%) is preferably 65 mol% or higher, more preferably 70 mol% or higher, still more preferably 80 mol% or higher, but is preferably 95 mol% or lower, more preferably 94.5 mol% or lower, still more preferably 94 mol% or lower. When the degree of hydrogenation is within the range indicated above, the advantageous effect tends to be better achieved.

The degree of hydrogenation can be calculated from the rate of decrease in the unsaturated bond signals in the $^1$H-NMR spectrum measured.

The conjugated diene unit content based on 100 mol% of the total structural units of the multi-component copolymers is preferably 1.9 mol% or more, more preferably 2.4 mol% or more, still more preferably 2.9 mol% or more, but is preferably 23.7 mol% or less, more preferably 16.9 mol% or less, still more preferably 10.7 mol% or less. When the content is within the range indicated above, the advantageous effect tends to be better achieved.

The non-conjugated olefin unit content based on 100 mol% of the total structural units of the multi-component copolymers is preferably more than 65 mol% and is more preferably 70 mol% or more, still more preferably 80 mol% or more, while it is preferably less than 95 mol% and is more preferably 94.5 mol% or less, still more preferably 94 mol% or less. When the content is within the range indicated above, the advantageous effect tends to be better achieved.

The aromatic vinyl unit content based on 100 mol% of the total structural units of the multi-component copolymers is preferably 4 mol% or more, more preferably 9 mol% or more, still more preferably 12 mol% or more, but is preferably 45 mol% or less, more preferably 40 mol% or less, still more preferably 35 mol% or less, particularly preferably 25 mol% or less. When the content is within the range indicated above, the advantageous effect tends to be better achieved.

The weight average molecular weight (Mw) of the multi-component copolymers is preferably 100,000 or more, more preferably 150,000 or more, still more preferably 200,000 or more, particularly preferably 400,000 or more, but is preferably 2,000,000 or less, more preferably 1,500,000 or less, still more preferably 1,000,000 or less, particularly preferably 600,000 or less. When the Mw is within the range indicated above, the advantageous effect tends to be better achieved.

The weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. Moreover, the Mw of copolymers having modifying groups should be measured before they are subjected to modification because otherwise accurate Mw measurements cannot be obtained due to the interaction between the modifying groups and the silica gel in the column.

The amount of the multi-component copolymers based on 100% by mass of the rubber components in the rubber composition is preferably 75% by mass or more, more preferably 80% by mass or more, still more preferably 85% by mass or more, particularly preferably 90% by mass or more, and may be 100% by mass. When the amount is within the range indicated above, the advantageous effect tends to be better achieved.

Examples of rubber components other than the multi-component copolymers that may be used in the rubber composition include diene rubbers such as natural rubbers (NR), styrene-butadiene rubbers (SBR), polybutadiene rubbers (BR), acrylonitrile-butadiene rubbers (NBR), and styrene-isoprene-butadiene copolymer rubbers (SIBR). Each of these may be used alone, or two or more of these may be used in combination.

The rubber components may be either unmodified or modified rubbers.

The modified rubbers may be any rubber having a functional group interactive with filler such as silica. Examples include chain end-modified rubbers obtained by modifying at least one chain end of rubbers with a compound (modifier) having the functional group (i.e., chain end-modified rubbers terminated with the functional group); backbone-modified rubbers having the functional group in the backbone; backbone- and chain end-modified rubbers having the functional group in both the backbone and chain end (e.g., backbone- and chain end-modified rubbers in which the backbone has the functional group and at least one chain end is modified with the modifier); and chain end-modified rubbers into which a hydroxy group or an epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Specific examples of the compound (modifier) having the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition preferably contains one or more plasticizers, particularly one or more plasticizers having an iodine value of 100 to 150 g/100 g which serve as sulfur-trapping agents). This can reduce recrosslinking reactions caused by excessive sulfur during running, resulting in better enduring performance.

The plasticizers are preferably at least one liquid resin (resin that is liquid at room temperature (25°C)) selected from the group consisting of C5/C9 resins, terpene resins, phenol resins, and aromatic vinyl polymers.

C5/C9 resins refer to polymers mainly containing structural units derived from C5 and C9 fractions. Examples include copolymers of C5 and C9 fractions and copolymers of C5 and C9 fractions with other monomers. Preferred among these are copolymers of C5 and C9 fractions (C5/C9 resins).

Terpene resins refer to polymers mainly containing structural units derived from terpenes. Examples include homopolymers of terpenes (e.g., α-pinene, β-pinene, farnesene, myrcene), copolymers of two or more terpenes, and copolymers of terpenes and other monomers (e.g., aromatic vinyl compounds, conjugated diene compounds), such as terpene-styrene copolymers and farnesene-butadiene copolymers.

Phenol resins refer to polymers mainly containing structural units derived from phenols, and may be produced by condensation reactions of phenols (e.g., phenol, alkylphenols) with aldehydes (e.g., formaldehyde, acetaldehyde, furfural) in the presence of acid or alkali catalysts. The phenol resins may also be modified with a modifier such as cashew oil, tall oil, or rosin.

Aromatic vinyl polymers refer to polymers mainly containing structural units derived from aromatic vinyl compounds. Examples include homopolymers of aromatic vinyl compounds (e.g., styrene, α-methylstyrene), copolymers of two or more aromatic vinyl compounds, and copolymers of aromatic vinyl compounds and other monomers (e.g., conjugated diene compounds, terpenes). Preferred among these are copolymers of aromatic vinyl compounds and other monomers, with styrene-butadiene copolymers or styrene-butadiene-farnesene copolymers being more preferred.

The iodine value of the plasticizers is preferably 100 g/100 g or higher, more preferably 108 g/100 g or higher, still more preferably 112 g/100 g or higher, but is preferably 200 g/100 g or lower, more preferably 150 g/100 g or lower, still more preferably 146 g/100 g or lower. When the iodine value is within the range indicated above, the advantageous effect tends to be better achieved.

The iodine value can be measured in accordance with JIS K6235-2006.

The plasticizers may be hydrogenated to control the iodine value. For example, styrene-butadiene copolymers are preferably hydrogenated to about 40 to 50 mol% based on the total butadiene moieties (structural units derived from butadiene) (= 100 mol%).

Examples of commercially available liquid resins usable as the plasticizers include products of Cray Valley and Kuraray Co., Ltd.

The amount of the plasticizers per 100 parts by mass of the rubber components is preferably 2 parts by mass or more, more preferably 5 parts by mass or more, still more preferably 7 parts by mass or more, particularly preferably 9 parts by mass or more, but is preferably 20 parts by mass or less, more preferably 18 parts by mass or less, still more preferably 16 parts by mass or less. When the amount is within the range indicated above, the advantageous effect tends to be better achieved.

The rubber composition may contain one or more solid resins (resins that are solid at room temperature (25°C)).

Any solid resin that is generally used in the tire industry may be used, but styrene resins are suitable.

Styrene resins refer to polymers mainly containing structural units derived from styrenes. Examples include homopolymers of styrenes (e.g., styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene), copolymers of two or more styrenes, and copolymers of styrenes and other monomers. Preferred among these are copolymers of two or more styrenes, with copolymers of $\alpha$-methylstyrene and styrene being more preferred.

The solid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., ExxonMobil, etc.

The amount of the solid resins per 100 parts by mass of the rubber components is preferably 5 parts by mass or more, more preferably 8 parts by mass or more, still more preferably 10 parts by mass or more, but is preferably 30 parts by mass or less, more preferably 20 parts by mass or less, still more preferably 15 parts by mass or less. When the amount is within the range indicated above, the advantageous effect tends to be better achieved.

The rubber composition may contain one or more types of carbon black.

Any carbon black may be used, and examples include N134, N110, N220, N234, N219, N339, N330, N326, N351, N550, and N762. The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The dibutyl phthalate (DBP) oil absorption of the carbon black is preferably 50 ml/100 g or more, more preferably 80 ml/100 g or more, still more preferably 100 ml/100 g or more, particularly preferably 110 ml/100 g or more, but is preferably 220 ml/100 g or less, more preferably 180 ml/100 g or less, still more preferably 160 ml/100 g or less, particularly preferably 140 ml/100 g or less. When the DBP oil absorption is within the range indicated above, the advantageous effect tends to be better achieved.

The DBP oil absorption of the carbon black is measured in accordance with JIS K6217-4:2001.

The nitrogen adsorption specific surface area ($N_2$SA) of the carbon black is preferably 80 $m^2$/g or more, more preferably 100 $m^2$/g or more, still more preferably 114 $m^2$/g or more, but is preferably 160 $m^2$/g or less, more preferably 140 $m^2$/g or less, still more preferably 125 $m^2$/g or less. When the $N_2$SA is within the range indicated above, the advantageous effect tends to be better achieved.

The $N_2$SA of the carbon black is measured in accordance with JIS K6217-2:2001.

Moreover, the carbon black may include a high structure carbon black having a dibutyl phthalate oil absorption of 250 ml/100 g or more and a nitrogen adsorption specific surface area of 350 $m^2$/g or more in addition to or instead of the above-described carbon black (usual carbon black).

Examples of the high structure carbon black include acetylene black and Ketjen black. Commercial products available from Lion Corporation, Mitsubishi Chemical Corporation, Denka Company Limited, etc. may be used. These may be used alone or in combinations of two or more. Ketjen black is preferred among these.

The dibutyl phthalate (DBP) oil absorption of the high structure carbon black is preferably 250 ml/100 g or more, more preferably 300 ml/100 g or more, still more preferably 350 ml/100 g or more, particularly preferably 360 ml/100 g or more, but is preferably 1,000 ml/100 g or less, more preferably 800 ml/100 g or less, still more preferably 600 ml/100 g or less, particularly preferably 450 ml/100 g or less. When the DBP oil absorption is within the range indicated above, the advantageous effect tends to be better achieved.

The nitrogen adsorption specific surface area ($N_2$SA) of the high structure carbon black is preferably 350 $m^2$/g or more, more preferably 550 $m^2$/g or more, still more preferably 750 $m^2$/g or more, particularly preferably 800 $m^2$/g or more, but is preferably 1,500 $m^2$/g or less, more preferably 1,300 $m^2$/g or less, still more preferably 1,100 $m^2$/g or less, particularly preferably 900 $m^2$/g or less. When the $N_2$SA is within the range indicated above, the advantageous effect tends to be better achieved.

The amount of the carbon black (the combined amount of the usual carbon black and the high structure carbon black, if used in combination) per 100 parts by mass of the rubber components is preferably 1 part by mass or more, more preferably 3 parts by mass or more, still more preferably 5 parts by mass or more, particularly preferably 10 parts by mass or more, but is preferably 50 parts by mass or less, more preferably 30 parts by mass or less, still more preferably 20 parts by mass or less, particularly preferably 15 parts by mass or less. When the amount is within the range indicated above, the advantageous effect tends to be better achieved. Particularly when the amount of the carbon black is 10 parts by mass or more, good properties such as cut resistance can be obtained.

The amount of the usual carbon black per 100 parts by mass of the rubber components is preferably 1 part by mass or more, more preferably 3 parts by mass or more, still more preferably 5 parts by mass or more, particularly preferably 10 parts by mass or more, but is preferably 50 parts by mass or less, more preferably 30 parts by mass or less, still more preferably 20 parts by mass or less, particularly preferably 15 parts by mass or less. When the amount is within the range indicated above, the advantageous effect tends to be better achieved.

The amount of the high structure carbon black per 100 parts by mass of the rubber components is preferably 1 part by mass or more, more preferably 3 parts by mass or more, still more preferably 5 parts by mass or more, but is preferably 20 parts by mass or less, more preferably 15 parts by mass or less, still more preferably 10 parts by mass or less. When the amount is within the range indicated above, the advantageous effect tends to be better achieved.

The rubber composition may contain one or more types of silica.

Examples of the silica include dry silica (silicic anhydride) and wet silica (hydrous silicic acid). Wet silica is preferred because it has a large number of silanol groups. Commercial products available from Evonik, Tosoh Silica Corporation, Solvay Japan, Tokuyama Corporation, etc. may be used. Each of these may be used alone, or two or more of these may be used in combination.

The nitrogen adsorption specific surface area ($N_2SA$) of the silica is preferably 100 $m^2$/g or more, more preferably 150 $m^2$/g or more, still more preferably 180 $m^2$/g or more, but is preferably 250 $m^2$/g or less, more preferably 220 $m^2$/g or less, still more preferably 200 $m^2$/g or less. When the $N_2SA$ is within the range indicated above, the advantageous effect tends to be better achieved.

The nitrogen adsorption specific surface area of the silica is measured by a BET method in accordance with ASTM D3037-81.

The amount of the silica per 100 parts by mass of the rubber components is preferably 20 parts by mass or more, more preferably 40 parts by mass or more, still more preferably 50 parts by mass or more, but is preferably 100 parts by mass or less, more preferably 80 parts by mass or less, still more preferably 60 parts by mass or less. When the amount is within the range indicated above, the advantageous effect tends to be better achieved.

The silica is preferably used together with one or more silane coupling agents.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Evonik, Momentive, Shin-Etsu Silicone, Tokyo Chemical Industry Co., Ltd., AZmax. Co., DuPont Toray Specialty Materials K.K., etc. may be used. These may be used alone or in combinations of two or more.

The amount of the silane coupling agents per 100 parts by mass of the silica is preferably 3 parts by mass or more, more preferably 6 parts by mass or more, but is preferably 12 parts by mass or less, more preferably 9 parts by mass or less. When the amount is within the range indicated above, the advantageous effect tends to be better achieved.

The rubber composition may contain one or more waxes.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Commercial products available from Ouchi Shinko Chemical Industrial Co., Ltd., Nippon Seiro Co., Ltd., Seiko Chemical Co., Ltd., etc. may be used. Each of these may be used alone, or two or more of these may be used in combination.

The amount of the waxes per 100 parts by mass of the rubber components is preferably 5 parts by mass or less, more preferably 3 parts by mass or less, and may be 0 parts by mass. When the amount is within the range indicated above, the advantageous effect tends to be better achieved.

The rubber composition may contain one or more oils.

Examples of the oils include process oils, plant oils, and mixtures of the foregoing oils. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., Fuji Kosan Co., Ltd., etc. may be used. Each of these may be used alone, or two or more of these may be used in combination.

The amount of the oils per 100 parts by mass of the rubber components is preferably 5 parts by mass or more, more preferably 15 parts by mass or more, still more preferably 25 parts by mass or more, but is preferably 60 parts by mass or less, more preferably 45 parts by mass or less, still more preferably 35 parts by mass or less. When the amount is within the range indicated above, the advantageous effect tends to be better achieved.

The rubber composition may contain one or more antioxidants.

Examples of the antioxidants include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Commercial products available from Seiko Chemical Co., Ltd., Sumitomo Chemical Co., Ltd., Ouchi Shinko Chemical Industrial Co., Ltd., Flexsys, etc. may be used. Each of these may be used alone, or two or more of these may be used in combination.

The amount of the antioxidants per 100 parts by mass of the rubber components is preferably 1 part by mass or more, more preferably 2 parts by mass or more, but is preferably 6 parts by mass or less, more preferably 4 parts by mass or less. When the amount is within the range indicated above, the advantageous effect tends to be better achieved.

The rubber composition may contain one or more types of stearic acid.

The stearic acid may be conventional ones. Commercial products available from NOF Corporation, Kao Corporation, FUJIFILM Wako Pure Chemical Corporation, Chiba Fatty Acid Co., Ltd., etc. may be used. Each of these may be used alone, or two or more of these may be used in combination.

The amount of the stearic acid per 100 parts by mass of the rubber components is preferably 1 part by mass or more, more preferably 3 parts by mass or more, still more preferably 3.6 parts by mass or more, but is preferably 10 parts by mass or less, more preferably 6 parts by mass or less. When the amount is within the range indicated above, the advantageous effect tends to be better achieved.

The rubber composition may contain one or more types of zinc oxide.

The zinc oxide may be conventional ones. Commercial products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. may be used. Each of these may be used alone, or two or more of these may be used in combination.

The amount of the zinc oxide per 100 parts by mass of the rubber components is preferably 1 part by mass or more, more preferably 3 parts by mass or more, but is preferably 10 parts by mass or less, more preferably 6 parts by mass or less. When the amount is within the range indicated above, the advantageous effect tends to be better achieved.

The rubber composition may contain one or more types of sulfur.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The amount of the sulfur per 100 parts by mass of the rubber components is preferably 0.5 parts by mass or more, more preferably 1 part by mass or more, but is preferably 6 parts by mass or less, more preferably 3 parts by mass or less. When the amount is within the range indicated above, the advantageous effect tends to be better achieved.

The rubber composition may contain one or more vulcanization accelerators.

Examples of the vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazyl sulfenamide (CBS), N-tert-butyl-2-benzothiazolyl sulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Commercial products available from Sumitomo Chemical Co., Ltd., Ouchi Shinko Chemical Industrial Co., Ltd., etc. may be used. These may be used alone or in combinations of two or more.

The amount of the vulcanization accelerators per 100 parts by mass of the rubber components is preferably 1 part by mass or more, more preferably 3 parts by mass or more, still more preferably 4.4 parts by mass or more, but is preferably 10 parts by mass or less, more preferably 8 parts by mass or less, still more preferably 6 parts by mass or less. When the amount is within the range indicated above, the advantageous effect tends to be better achieved.

In addition to the above-described components, the rubber composition may contain additives commonly used in the tire industry, including for example organic peroxides and fillers such as calcium carbonate, talc, alumina, clay, aluminum hydroxide, and mica. The amount of these additives is preferably 0.1 to 200 parts by mass per 100 parts by mass of the rubber components.

The rubber composition may be prepared, for example, by kneading the above-mentioned components using a rubber kneading machine such as an open roll mill or a Bunbary mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, and preferably 85 to 110°C. The composition obtained after kneading vulcanizing agents and vulcanization accelerators is usually vulcanized by, for example, press vulcanization. The vulcanization temperature is usually 140 to 190°C, preferably 150 to 185°C. The vulcanization time is usually 5 to 15 minutes.

The tire of the present disclosure can be produced from the above-described rubber composition by usual methods.

Specifically, the unvulcanized rubber composition may be extruded into the shape of a tread and then assembled with other tire components on a tire building machine in a usual manner to build an unvulcanized tire. The unvulcanized tire may be heated and pressurized in a vulcanizer to produce a tire.

It is sufficient that the tread of the tire at least partially contain the rubber composition. The entire tread may contain the rubber composition.

For a tread having a multi-layer structure including a cap tread and a base tread, preferably at least the cap tread contains the rubber composition. More preferably, the cap tread contains the rubber composition, and the base tread or other layer contains another rubber composition.

The tire (e.g., pneumatic tire) may be used as any of the following tires: tires for passenger cars; tires for trucks and buses; tires for two-wheeled vehicles; high performance tires; winter tires such as studless winter tires; run-flat tires provided with side reinforcing layers; noise absorber-equipped tires which include a noise absorber such as sponge on the tire inner cavity; sealant-attached tires which include a sealant capable of sealing punctures either inside the tire or on the tire inner cavity; electronic component-equipped tires which include an electronic component such as a sensor or a radio tag either inside the tire or on the tire inner cavity, etc. The tire is suitable for passenger cars.

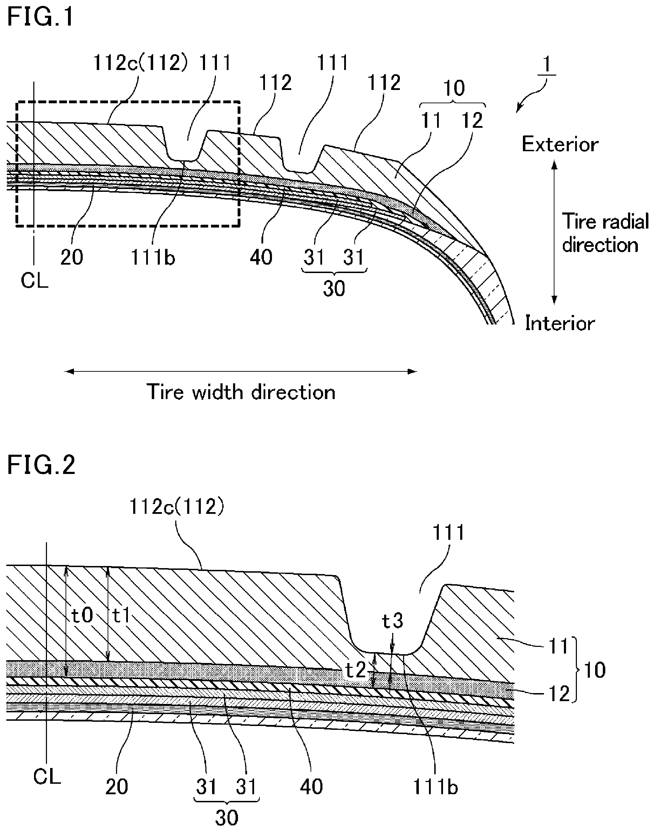

The tire is described in more detail with reference to the drawings below. Fig. 1 is a schematic cross-sectional view showing an example of a tire. Fig. 2 is a detail view in the vicinity of the tread shown in Fig. 1.

A tire (pneumatic tire) 1 includes a tread 10 containing the above-described rubber composition. The tread 10 has a multi-layer structure in which a cap tread 11 and a base tread 12, in order from the tire outer surface, are stacked. The cap tread 11 contains the rubber composition. The cap tread 11 is provided with two or more circumferential grooves 111 and a plurality of land portions 112 defined by the circumferential grooves 111.

Moreover, the pneumatic tire 1 further includes a carcass 20, a belt 30 disposed radially outward of the carcass 20, and a belt-reinforcing layer 40 disposed radially outward of the belt 30. The tread 10 (base tread 12) is disposed radially outward of the belt-reinforcing layer 40 in the tire. The belt 30 includes a plurality of belt plies 31.

The tire preferably satisfies the following relationship 4) in a center land portion 112c that is closest to the tire equator CL among the land portions 112 of the cap tread 11:

$$4) \quad 0.30 \leq (t0 - t1)/t0 \leq 0.40$$

wherein t0 denotes the thickness from the belt-reinforcing layer (band) 40 (i.e., from the outer surface of the belt-reinforcing layer 40) to the outer surface of the center land portion 112c, and t1 denotes the thickness of a rubber layer that forms the cap tread 11.

If the amount of carbon black is increased in the rubber composition included in the cap tread 11, the cut resistance can be improved due to enhanced reinforcement, but the fuel economy tends to be deteriorated due to an increase in tan $\delta$. This problem may be overcome when t0 and t1 satisfy relationship 4) so that a deterioration in fuel economy due to an increased carbon black content can be reduced, and thus both a good level of cut resistance and a good level of fuel economy can be achieved. Further, good properties such as enduring wet grip performance can also be obtained.

The lower limit of relationship 4) is preferably 0.33, more preferably 0.35, while the upper limit is preferably 0.39, more preferably 0.38. When they are within the respective ranges indicated above, the advantageous effect tends to be better achieved.

The thickness t0 is preferably 4 mm or more, more preferably 6 mm or more, still more preferably 7 mm or more, but is preferably 12 mm or less, more preferably 10 mm or less. When t0 is within the range indicated above, the advantageous effect tends to be better achieved.

The thickness t1 is preferably 3.5 mm or more, more preferably 4.5 mm or more, but is preferably 11.5 mm or less, more preferably 8.5 mm or less, still more preferably 6.0 mm or less. When t1 is within the range indicated above, the advantageous effect tends to be better achieved.

The value of "t0 - t1" is preferably 0.5 mm or more, more preferably 1.0 mm or more, still more preferably 2.0 mm or more, but is preferably 4.0 mm or less, more preferably 3.0 mm or less. When the value is within the range indicated above, the advantageous effect tends to be better achieved.

The tire preferably satisfies the following relationship 5) in a bottom portion 111b that is a deepest part of the circumferential grooves 111:

$$5) \quad 0.50 \leq t3/t2 \leq 1.00$$

wherein t2 denotes the thickness from the belt-reinforcing layer 40 (i.e., from the outer surface of the belt-reinforcing layer 40) to the outer surface of the bottom portion 111b, and t3 denotes the thickness of a rubber layer that forms the cap tread 11. This can provide good properties such as cut resistance.

The lower limit of relationship 5) is preferably 0.60, more preferably 0.70, still more preferably 0.80, while the upper limit is preferably 0.95, more preferably 0.90, still more preferably 0.85. When they are within the respective ranges indicated above, the advantageous effect tends to be better achieved.

The thickness t2 is preferably 0.5 mm or more, more preferably 0.8 mm or more, still more preferably 1.0 mm or more, but is preferably 3.0 mm or less, more preferably 2.0 mm or less. When t2 is within the range indicated above, the advantageous effect tends to be better achieved.

The thickness t3 is preferably 0.3 mm or more, more preferably 0.5 mm or more, but is preferably 3.0 mm or less, more preferably 2.5 mm or less, still more preferably 1.5 mm or less. When t3 is within the range indicated above, the advantageous effect tends to be better achieved.

EXAMPLES

The present disclosure is concretely described below with reference to, but not limited to, examples.

The chemicals used in the examples and comparative examples are listed below.

Hydrogenated SBR (1): Production Example 1-1 described below (degree of hydrogenation: 80 mol%, conjugated diene unit: 10.4 mol%, non-conjugated olefin unit: 80.6 mol%, aromatic vinyl unit: 9.0 mol%, Mw: 480,000)
Hydrogenated SBR (2): Production Example 1-2 described below (degree of hydrogenation: 93 mol%, conjugated diene unit: 3.3 mol%, non-conjugated olefin unit: 84.2 mol%, aromatic vinyl unit: 12.5 mol%, Mw: 450,000)
Hydrogenated SBR (3): Production Example 1-3 described below (degree of hydrogenation: 95 mol%, conjugated diene unit: 2.3 mol%, non-conjugated olefin unit: 86.2 mol%, aromatic vinyl unit: 11.5 mol%, Mw: 450,000)
SBR (1): NS 616 available from ZS Elastomer Co., Ltd.
SBR (2): SLR 6430 (oil content: 37.5 parts by mass per 100 parts by mass of rubber solids) available from Trinseo
BR: BR730 available from JSR Corporation
Liquid resin (1-1): RICON 340 (liquid C5/C9 resin, iodine value: 112.6 g/100 g) available from Cray Valley
Liquid resin (1-2): 50 mol% hydrogenated product of RICON 100 (liquid hydrogenated SBR, iodine value: 143 g/100 g) available from Cray Valley
Liquid resin (1-3): Production Example 2 described below (liquid styrene-butadiene-farnesene copolymer, iodine value: 143 g/100 g)
Liquid resin (2-1): LIR-50 (liquid IR, iodine value: 289 g/100 g) available from Kuraray Co., Ltd.
Liquid resin (2-2): LIR-30 (liquid IR, iodine value: 246 g/100 g) available from Kuraray Co., Ltd.
Liquid resin (2-3): LBR-307 (liquid BR, iodine value: 355 g/100 g) available from Kuraray Co., Ltd.
Liquid resin (2-4): RICON 184 (liquid SBR, iodine value: 207 g/100 g) available from Cray Valley
Liquid resin (2-5): NOVARES C10 (liquid coumarone-indene resin, iodine value: 48 g/100 g) available from Rutgers Chemicals
Liquid resin (2-6): NOVARES C30 (liquid coumarone-indene resin, iodine value: 61 g/100 g) available from Rutgers Chemicals
Carbon black: N220 (DBP oil absorption: 115 ml/100 g, $N_2SA$: 114 m$^2$/g) available from Cabot Japan K.K.
Carbon black N134: N134 (DBP oil absorption: 123 ml/100 g, $N_2SA$: 148 m$^2$/g) available from Cabot Japan K.K.
High structure carbon black: Ketjen black EC300J (DBP oil absorption: 360 ml/100 g, $N_2SA$: 800 m$^2$/g) available from Lion Corporation
Silica: ULTRASIL VN3 ($N_2SA$: 180 m$^2$/g) available from Evonik
Wax: Ozoace 0355 available from Nippon Seiro Co., Ltd.
Silane coupling agent: Si266 (bis(3-triethoxysilylpropyl)disulfide) available from Evonik
Oil: Diana Process NH-70S (aromatic process oil) available from Idemitsu Kosan Co., Ltd.

Solid resin: Sylvatraxx 4401 (copolymer of $\alpha$-methylstyrene and styrene, softening point: 85°C) available from Arizona Chemical

Solid resin SA85: SYLVARES SA85 (copolymer of $\alpha$-metylstyrene and styrene, softening point: 85°C) available from Kraton

Antioxidant 6C: NOCRAC 6C (N-phenyl-N'-(1,3-dimethylbutyl)-p-phenylenediamine) available from Ouchi Shinko Chemical Industrial Co., Ltd.

Antioxidant FR: Antigene FR (a purified reaction product of an amine and a ketone, containing no residual amine; quinoline antioxidant) available from Sumitomo Chemical Co., Ltd.

Stearic acid: stearic acid "TSUBAKI" available from NOF Corporation

Zinc oxide: zinc oxide #1 available from Mitsui Mining & Smelting Co., Ltd.

Sulfur: HK-200-5 (5% by mass oil-containing powdered sulfur) available from Hosoi Chemical Industry Co., Ltd.

Vulcanization accelerator TRA: NOCCELER TRA (dipentamethylenethiuram tetrasulfide) available from Ouchi Shinko Chemical Industrial Co., Ltd.

Vulcanization accelerator TBzTD: Sanceler TBzTD (tetrabenzylthiuram disulfide) available from Sanshin Chemical Industry Co., Ltd.

Vulcanization accelerator CLD80: Rhenogran CLD-80 (N,N'-di($\varepsilon$-caprolactam)disulfide) available from Rhein Chemie

Vulcanization accelerator M: NOCCELER M (2-mercaptobenzothiazole) available from Ouchi Shinko Chemical Industrial Co., Ltd.

Vulcanization accelerator DPG: NOCCELER D (N,N'-diphenylguanidine (DPG)) available from Ouchi Shinko Chemical Industrial Co., Ltd.

Vulcanization accelerator NS: NOCCELER NS (N-tert-butyl-2-benzothiazylsulfenamide (TBBS)) available from Ouchi Shinko Chemical Industrial Co., Ltd.

<Production Example 1-1: Production of hydrogenated SBR (1) >

A sufficiently nitrogen-purged heat-resistant reaction vessel was charged with 2,000 mL of n-hexane, 50 g of styrene, 150 g of 1,3-butadiene, 0.93 g of N,N,N',N'-tetramethylethylenediamine (TMEDA), and 0.45 mmol of n-butyllithium, followed by stirring at 50°C for five hours to perform a polymerization reaction. Thereafter, the reaction solution was stirred for 20 minutes while supplying hydrogen gas at a pressure of 0.4 MPa gauge to react unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. Then, the solvent was removed by steam stripping to obtain hydrogenated SBR (1).

<Production Example 1-2: Production of hydrogenated SBR (2) >

Hydrogenated SBR (2) was prepared as in Production Example 1-1, except that the amounts of styrene and 1,3-butadiene were changed to 70 g and 130 g, respectively, and the cumulative amount of absorbed hydrogen was changed.

<Production Example 1-3: Production of hydrogenated SBR (3) >

A sufficiently nitrogen-purged heat-resistant reaction vessel was charged with 2,000 mL of n-hexane, 61 g of styrene, 139 g of 1,3-butadiene, 0.93 g of N,N,N',N'-tetramethylethylenediamine (TMEDA), and 0.45 mmol of n-butyllithium, followed by stirring at 50°C for five hours to perform a polymerization reaction. Then, 0.15 mol of an amine modifier (N,N-bis(trimethylsilyl)aminopropylmethyldiethoxysilane) was added, and the mixture was stirred at 0°C for one hour. The subsequent procedure was carried out as in Production Example 1-1, except that the cumulative amount of absorbed hydrogen was varied, thereby obtaining hydrogenated SBR (3).

<Production Example 2: Production of liquid resin (1-3)>

A copolymer having a composition ratio of 20% by mass styrene, 35% by mass butadiene, and 45% by mass farnesene and a Mw of 30,000 (liquid resin (1-3), liquid styrene-butadiene-farnesene copolymer) was prepared under modified conditions of the synthetic method for copolymer 6 in JP 6173923 B.

<Examples and Comparative Examples>

The materials other than the sulfur and vulcanization accelerators in the formulation amounts shown in Table 1 were kneaded in a 1.7 L Banbury mixer (Kobe Steel, Ltd.) for five minutes and then discharged at 150°C to give a kneaded mixture. Then, the sulfur and vulcanization accelerators were added to the kneaded mixture, and they were kneaded in an open roll mill at 80°C for five minutes to give an unvulcanized rubber composition.

The unvulcanized rubber composition was formed into a cap tread and then extruded together with a rubber compound to be used as a base tread (base rubber) to form a tread including two layers consisting of the cap tread and the base tread. Then, the tread was assembled with other tire components (carcass, belt, belt-reinforcing layer, etc.) on a tire building machine to build an unvulcanized tire. The unvulcanized tire was vulcanized at 170°C for 10 minutes to prepare a test tire.

The test tires prepared as above were evaluated as described below. Tables 1 and 2 show the results.

It should be noted that all the measurements were performed within 180 days after the production (vulcanization) of the test tires.

Moreover, the tan $\delta$, fuel economy, and cut resistance were measured only on the examples shown in Table 2.

(Hardness)

The hardness (JIS-A hardness) at room temperature (25°C) of specimens cut out from the tread (cap tread) of each test tire (Hso) was measured in accordance with JIS K6253-3 (2012) "Rubber, vulcanized or thermoplastic - Determination of hardness- Part 3: Durometer method" using a type A durometer.

Moreover, the measured specimens were heat-treated at an oxygen concentration of 20% and a temperature of 80°C for 168 hours. The hardness at room temperature of the resulting specimens (Hsa) was measured as described above.

(Sulfur content)

The sulfur content (% by mass) of specimens cut out from the tread (cap tread) of each test tire (Ts) was determined by an oxygen combustion flask method in accordance with JIS K6233:2016.

Separately, specimens cut out from the tread (cap tread) of each test tire were set in a Soxhlet extractor and subjected to acetone extraction under the following conditions: specimen: 10 g or less, acetone: 150 ml, thermostatic bath temperature: 95 to 100°C, and extraction time: 24 to 72 hours. Then, the acetone-extracted specimens were placed and heated in an oven at 100°C for 30 minutes to remove the solvent from the specimens. The sulfur content (% by mass) of the resulting specimens (As) was determined by the oxygen combustion flask method in accordance with JIS K6233:2016.

Here, the specimens used in the measurements of Ts and As had the same size.

(Volume change before and after immersion)

Specimens cut out from the tread (cap tread) of each test tire were immersed in toluene at 25°C for 24 hours, and a volume change before and after the immersion (Swell (%)) was determined.

(Wet grip performance (on vehicle))

Eight test tires with the same formulation were prepared. Four of them were mounted on each wheel of a front-engine, front-wheel-drive car of 2,000 cc displacement made in Japan. The braking distance of the car with an initial speed of 100 km/h on a wet asphalt road was determined.

Next, the remaining four unevaluated tires were mounted on each wheel of a front-engine, front-wheel-drive car of 2,000 cc displacement made in Japan. After the car was driven for 20,000 km, the same evaluation as described above was performed. The degree of deterioration in wet grip performance (retention of wet grip performance) was expressed as an index using the equation below.

Generally, the index is 100 or less. An index closer to 100 indicates a smaller deterioration in wet grip performance due to driving and is thus better. Degree of deterioration in wet grip performance = (Braking distance before driving)/(-Braking distance after driving) $\times$ 100

(tan $\delta$)

The tan $\delta$ of specimens cut out from the tread (cap tread) of each test tire was measured using EPLEXOR available from GABO at a frequency of 10 Hz, an initial strain of 10%, a dynamic strain of 1%, and a temperature of 30°C.

The reciprocals of the tan $\delta$ values were expressed as an index relative to Example 16 (= 100). A higher index indicates a smaller tan $\delta$ value and less heat build-up.

Moreover, specimens cut out from the base tread (base rubber) was also measured as described above. The results are expressed as an index relative to the reciprocal of the tan $\delta$ value of the specimens cut out from the tread (cap tread) of Example 16 (= 100). A higher index indicates a smaller tan $\delta$ value and less heat build-up.

(Fuel economy)

The rolling resistance of the test tires running at a speed of 80 km/h was measured using a rolling resistance tester. The rolling resistance is expressed as an index relative to Example 16 (= 100). A higher index indicates a smaller rolling resistance and better fuel economy.

(Cut resistance)

The test tires were mounted on each wheel of a front-engine, front-wheel-drive car of 2,000 cc displacement made in Japan. The car was driven for 150 km on a dirt course. Then, the tires were removed from the rims, and the cap tread surface of the tires was visually observed to evaluate the number and size of cracks. The results are expressed as an index relative to Example 16 (= 100). A higher index indicates better cut resistance.

[Table 1]

Formulation (parts by mass) and Evaluation

| | Ex 1 | Ex 2 | Ex 3 | Ex 4 | Ex 5 | Ex 6 | Ex 7 | Ex 8 | Ex 9 | Ex 10 | Ex 11 | Ex 12 | Ex 13 | Ex 14 | Ex 15 | CEx 1 | CEx 2 | CEx 3 | CEx 4 | CEx 5 | CEx 6 | CEx 7 | CEx 8 |
|---|---|---|---|---|---|---|---|---|---|---|---|---|---|---|---|---|---|---|---|---|---|---|---|
| Hydrogenated SBR (1) | 100 | | 100 | | | 100 | 100 | | 100 | 100 | 100 | 100 | 100 | | | | 100 | 100 | 100 | 100 | 100 | 100 | 100 |
| Hydrogenated SBR (2) | | 100 | | | 100 | | | | | | | | | | | | | | | | | | |
| Hydrogenated SBR (3) | | | | 100 | | | | 100 | | | | | | 100 | | | | | | | | | |
| SBR (1) | | | | | | | | | | | | | | | 100 | 65 | | | | | | | |
| SBR (2) | | | | | | | | | | | | | | | | 27.5 | | | | | | | |
| BR | | | | | | | | | | | | | | | | 15 | | | | | | | |
| Liquid resin (1-1) | 10 | | 10 | 10 | 5 | | | 10 | 5 | | 10 | | 10 | 10 | 10 | | | | | | | | |
| Liquid resin (1-2) | | 10 | | | | | | | | | | | | | | | | | | | | | |
| Liquid resin (1-3) | | | | | | 15 | 20 | | | 15 | | 10 | | | | | | | | | | | |
| Liquid resin (2-1) | | | | | | | | | | | | | | | | | | 10 | | | | | |
| Liquid resin (2-2) | | | | | | | | | | | | | | | | | | | 10 | | | | |
| Liquid resin (2-3) | | | | | | | | | | | | | | | | | | | | 10 | | | |
| Liquid resin (2-4) | | | | | | | | | | | | | | | | | | | | | 10 | | |
| Liquid resin (2-5) | | | | | | | | | | | | | | | | | | | | | | 10 | |
| Liquid resin (2-6) | | | | | | | | | | | | | | | | | | | | | | | 10 |
| Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| Silica | 50 | 50 | 50 | 50 | 50 | 50 | 50 | 30 | 50 | 50 | 50 | 50 | 50 | 50 | 30 | 50 | 50 | 50 | 50 | 50 | 50 | 50 | 50 |
| Wax | 0.5 | 0.5 | 0.5 | | | | | | | | | | | | | | | | | | | | |
| Silane coupling agent | 4.3 | 4.3 | 4.3 | 4.3 | 4.3 | 4.3 | 4.3 | 4.3 | 4.3 | 4.3 | 4.3 | 4.3 | 4.3 | 4.3 | 2.4 | 4.3 | 4.3 | 4.3 | 4.3 | 4.3 | 4.3 | 4.3 | 4.3 |
| Oil | 25 | 30 | 25 | 30 | 30 | 25 | 25 | 20 | 20 | 27 | 20 | 30 | 27 | 25 | | 5 | 35 | 25 | 25 | 25 | 25 | 25 | 25 |
| Solid resin | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 |
| Antioxidant 6C | 2 | 1 | 2 | 1 | 1 | 2 | 2 | 1 | 1 | 2 | 1 | 1 | 2 | 1 | | 1 | 1 | 1 | 1 | 1 | 1 | 1 | 1 |
| Antioxidant FR | 1 | 1 | 1 | 1 | 1 | 1 | 1 | 1 | 1 | 1 | 1 | 1 | 1 | 1 | | 1 | 1 | 1 | 1 | 1 | 1 | 1 | 1 |
| Stearic acid | 3.6 | 2 | 8 | 4 | 4 | 2 | 8 | 3.6 | 2 | 8 | 3 | 3 | 3.6 | 3.6 | 8 | 3 | 3.6 | 3.6 | 3.6 | 3.6 | 3.6 | 3.6 | 3.6 |
| Zinc oxide | 3 | 2.2 | 6 | 3.2 | 3.2 | 2.2 | 6 | 3 | 2.2 | 6 | 3 | 2.6 | 3 | 3 | 6 | 2 | 2.2 | 2.2 | 2.2 | 2.2 | 2.2 | 2.2 | 2.2 |
| Sulfur | 1 | 1 | 1 | 1 | 1 | 1 | 1 | 1 | 1.5 | 1 | 1 | 0.5 | 1 | 1 | 1.2 | 1.2 | 1 | 1 | 1 | 1 | 1 | 1 | 1 |
| Vulcanization accelerator TRA | 1 | | 1 | | | 1 | 1 | | | 2 | | | 2 | 2 | | | | | | | | | |
| Vulcanization accelerator TBzTD | | 2 | | 2 | 2 | | | 0.5 | | | 0.5 | | 2 | | | | | | | | | | |
| Vulcanization accelerator CLD80 | | | | | | | | 0.5 | 0.5 | | 0.5 | 0.5 | | | | | | | | | | | |
| Vulcanization accelerator M | | | | | | | | 0.5 | 0.5 | | 0.5 | 0.5 | | | | | | | | | | | |
| Vulcanization accelerator DPG | 1.6 | 1.4 | 1.6 | 1.4 | 1.4 | 1.6 | 1.6 | 1.4 | 1.6 | 1.6 | 1.8 | 1.8 | 1.4 | 1.4 | 2 | 2.5 | 1.6 | 1.6 | 1.6 | 1.6 | 1.6 | 1.6 | 1.6 |
| Vulcanization accelerator NS | 2 | 1 | 2 | 1 | 1 | 2 | 2 | 1 | 2 | 1.4 | 1.7 | 1.8 | 1 | 1 | 2.4 | 1.3 | 2 | 2 | 2 | 2 | 2 | 2 | 2 |
| Hso | 54.0 | 50.0 | 56.0 | 53.0 | 54.9 | 53.8 | 53.0 | 54.1 | 56.2 | 52.1 | 54.2 | 51.5 | 51.2 | 53.5 | 53.2 | 52.7 | 52.4 | 52.7 | 52.7 | 52.2 | 52.2 | 52.2 | 52.2 |
| Hsa | 56.1 | 51.6 | 57.0 | 53.8 | 57.1 | 54.5 | 53.5 | 55.4 | 59.2 | 52.3 | 56.2 | 53.0 | 51.9 | 54.6 | 54.1 | 58.7 | 55.5 | 54.8 | 54.8 | 54.1 | 55.0 | 57.2 | 56.9 |
| Hso/Has × 100 | 96.2 | 96.9 | 98.2 | 98.6 | 96.1 | 98.8 | 99.1 | 97.6 | 95.0 | 99.6 | 96.4 | 97.2 | 98.6 | 98.0 | 98.4 | 89.8 | 94.4 | 96.2 | 96.1 | 96.4 | 94.9 | 91.3 | 91.8 |
| Ts | 1.1 | 1.1 | 1.1 | 1.1 | 1.1 | 1.1 | 1.1 | 1.1 | 1.4 | 1.1 | 1.1 | 1.1 | 1.1 | 1.1 | 1.3 | 1.1 | 1.1 | 1.1 | 1.1 | 1.1 | 1.1 | 1.1 | 1.1 |
| As | 0.75 | 0.72 | 0.73 | 0.71 | 0.73 | 0.75 | 0.70 | 0.66 | 0.80 | 0.77 | 0.76 | 0.75 | 0.72 | 0.72 | 0.90 | 0.70 | 0.80 | 0.83 | 0.81 | 0.86 | 0.78 | 0.65 | 0.66 |
| As/Ts × 100 | 68.6 | 65.2 | 66.4 | 64.5 | 65.9 | 68.0 | 63.7 | 60.1 | 57.4 | 70.0 | 69.4 | 67.8 | 65.2 | 65.8 | 69.2 | 63.7 | 75.5 | 75.5 | 73.6 | 78.2 | 70.9 | 59.1 | 60.0 |
| Swell | 299 | 301 | 301 | 298 | 291 | 302 | 305 | 320 | 295 | 293 | 315 | 330 | 301 | 278 | 310 | 311 | 283 | 341 | 336 | 360 | 318 | 273 | 276 |
| Degree of deterioration in wet grip performance (index) | 92 | 94 | 96 | 96 | 92 | 97 | 97 | 95 | 91 | 97 | 93 | 95 | 96 | 96 | 96 | 80 | 87 | 88 | 87 | 88 | 89 | 72 | 75 |

16

[Table 2]

| | | Example | | | | | | | | | | | | |
|---|---|---|---|---|---|---|---|---|---|---|---|---|---|---|
| | | 16 | 17 | 18 | 19 | 20 | 21 | 22 | 23 | 24 | 25 | 26 | 27 | 28 |
| Formulation (parts by mass) | Hydrogenated SBR (2) | 100 | 100 | 100 | 100 | 100 | 100 | 100 | 100 | 100 | 100 | 100 | 100 | 100 |
| | Liquid resin (1-1) | 10 | 10 | 10 | 10 | 10 | 10 | 10 | 10 | 10 | 10 | 10 | 10 | 10 |
| | Carbon black N134 | 5 | 10 | 25 | 50 | 25 | 25 | 25 | 25 | 25 | 25 | 25 | 25 | 25 |
| | High structure carbon black | | | | | 5 | | | | | | | | |
| | Silica | 50 | 50 | 35 | 10 | 35 | 35 | 35 | 35 | 35 | 35 | 35 | 35 | 35 |
| | Wax | 0.5 | 0.5 | 0.5 | 0.5 | 0.5 | 0.5 | 0.5 | 0.5 | 0.5 | 0.5 | 0.5 | 0.5 | 0.5 |
| | Silane coupling agent | 4.3 | 4.3 | 3.01 | 0.86 | 3.01 | 3.01 | 3.01 | 3.01 | 3.01 | 3.01 | 3.01 | 3.01 | 3.01 |
| | Oil | 20 | 20 | 20 | 20 | 20 | 20 | 20 | 20 | 20 | 20 | 20 | 20 | 20 |
| | Solid resin SA85 | 10 | 10 | 10 | 10 | 10 | 10 | 10 | 10 | 10 | 10 | 10 | 10 | 10 |
| | Antioxidant 6C | 1 | 1 | 1 | 1 | 1 | 1 | 1 | 1 | 1 | 1 | 1 | 1 | 1 |
| | Antioxidant FR | 1 | 1 | 1 | 1 | 1 | 1 | 1 | 1 | 1 | 1 | 1 | 1 | 1 |
| | Stearic acid | 3.6 | 3.6 | 3.6 | 3.6 | 3.6 | 3.6 | 3.6 | 3.6 | 3.6 | 3.6 | 3.6 | 3.6 | 3.6 |
| | Zinc oxide | 3 | 3 | 3 | 3 | 3 | 3 | 3 | 3 | 3 | 3 | 3 | 3 | 3 |
| | Sulfur | 1 | 1 | 1 | 1 | 1 | 1 | 1 | 1 | 1 | 1 | 1 | 1 | 1 |
| | Vulcanization accelerator DPG | 1.6 | 1.6 | 1.6 | 1.4 | 1.6 | 1.6 | 1.6 | 1.6 | 1.6 | 1.6 | 1.6 | 1.6 | 1.6 |
| | Vulcanization accelerator NS | 2 | 2 | 2 | 1.9 | 2 | 2 | 2 | 2 | 2 | 2 | 2 | 2 | 2 |
| t0 (mm) | | 7.7 | 7.7 | 7.7 | 7.7 | 7.7 | 7.7 | 7.7 | 7.7 | 7.7 | 7.7 | 7.7 | 7.7 | 7.7 |
| t1 (mm) | | 5.0 | 5.0 | 5.0 | 5.0 | 5.0 | 5.8 | 5.4 | 4.6 | 4.2 | 5.0 | 5.0 | 5.0 | 5.0 |
| t2 (mm) | | 1.2 | 1.2 | 1.2 | 1.2 | 1.2 | 1.2 | 1.2 | 1.2 | 1.2 | 1.2 | 1.2 | 1.2 | 1.2 |
| t3 (mm) | | 1.02 | 1.02 | 1.02 | 1.02 | 1.02 | 1.02 | 1.02 | 1.02 | 1.02 | 0.48 | 0.6 | 1.2 | 1.32 |
| (t0 - t1)/t0 | | 0.35 | 0.35 | 0.35 | 0.35 | 0.35 | 0.25 | 0.30 | 0.40 | 0.45 | 0.35 | 0.35 | 0.35 | 0.35 |
| t3/t2 | | 0.85 | 0.85 | 0.85 | 0.85 | 0.85 | 0.85 | 0.85 | 0.85 | 0.85 | 0.40 | 0.50 | 1.00 | 1.10 |
| Evaluation | Hso | 54.0 | 56.1 | 56.4 | 57.5 | 59.0 | 56.4 | 56.4 | 56.4 | 56.4 | 56.4 | 56.4 | 56.4 | 56.4 |
| | Hsa | 56.1 | 57.7 | 57.5 | 58.3 | 59.4 | 57.5 | 57.5 | 57.5 | 57.5 | 57.5 | 57.5 | 57.5 | 57.5 |
| | Hso/Has × 100 | 96.2 | 97.1 | 98.0 | 98.7 | 99.3 | 98.0 | 98.0 | 98.0 | 98.0 | 98.0 | 98.0 | 98.0 | 98.0 |
| | Ts | 1.1 | 1.1 | 1.1 | 0.99 | 1.1 | 1.1 | 1.1 | 1.1 | 1.1 | 1.1 | 1.1 | 1.1 | 1.1 |
| | As | 0.75 | 0.73 | 0.74 | 0.68 | 0.72 | 0.74 | 0.74 | 0.74 | 0.74 | 0.74 | 0.74 | 0.74 | 0.74 |
| | As/Ts × 100 | 68.6 | 66.6 | 67.0 | 69.0 | 65.5 | 67.0 | 67.0 | 67.0 | 67.0 | 67.0 | 67.0 | 67.0 | 67.0 |
| | Swell | 299 | 295 | 295 | 295 | 288 | 295 | 295 | 295 | 295 | 295 | 295 | 295 | 295 |
| | tan δ of cap tread | 100 | 88 | 80 | 72 | 72 | 80 | 80 | 80 | 80 | 80 | 80 | 80 | 80 |
| | tan δ of base rubber | 185 | 185 | 185 | 185 | 185 | 185 | 185 | 185 | 185 | 185 | 185 | 185 | 185 |
| | Degree of deterioration in wet grip performance (index) | 92 | 95 | 96 | 97 | 97 | 96 | 96 | 96 | 96 | 96 | 96 | 96 | 96 |
| | Fuel economy (index) | 100 | 97 | 95 | 93 | 93 | 91 | 93 | 97 | 99 | 95 | 95 | 95 | 95 |
| | Cut resistance (index) | 100 | 108 | 120 | 127 | 125 | 105 | 115 | 120 | 110 | 103 | 112 | 116 | 106 |

Table 1 demonstrates that the examples satisfying relationships 1) to 3) when measured within 180 days after vulcanization showed a slight deterioration in wet grip performance due to driving and thus excellent enduring performance.

Moreover, Table 2 demonstrates that good cut resistance was obtained by increasing the amount of carbon black or incorporating a high structure carbon black, and that the overall performance in terms of cut resistance and fuel economy (the sum of the indices) was improved by satisfying relationships 4) and 5).

REFERENCE SIGNS LIST

1 pneumatic tire
10 tread
11 cap tread
111 circumferential groove
111b bottom portion
112 land portion
112c center land portion
12 base tread
20 carcass

30 belt
31 belt ply
40 belt-reinforcing layer (band)
t0 thickness from belt-reinforcing layer to outer surface
of center land portion in center land portion
t1 thickness of rubber layer that forms cap tread in center land portion
t2 thickness from belt-reinforcing layer to outer surface of bottom portion in bottom portion
t3 thickness of rubber layer that forms cap tread in bottom portion

**Claims**

1. A tire, comprising a tread comprising a rubber composition,
the rubber composition satisfying the following relationships 1) to 3) when measured within 180 days after vulcanization:

$$1) \quad \text{Hso/Hsa} \times 100 \geq 95$$

wherein Hso: hardness at room temperature,
Hsa: hardness at room temperature after heat treatment at 80°C for 168 hours, when Hso and Hsa are measured in accordance with JIS K6253-3 (2012) "Rubber, vulcanized or thermoplastic -Determination of hardness- Part 3: Durometer method" using a type A durometer;

$$2) \quad \text{As/Ts} \times 100 \leq 70$$

wherein Ts: sulfur content before acetone extraction,
As: sulfur content after acetone extraction, when As and Ts are measured in accordance with JIS K6233:2016, wherein the acetone extraction is carried out as described in section (sulfur content) of the specification; and

$$3) \quad \text{Swell} \leq 330$$

wherein Swell: toluene swelling index, when Swell is a volume change before and after immersion of a specimen in toluene at 25°C for 24 hours, wherein the specimen is cut from the tread.

2. The tire according to claim 1,

wherein the rubber composition comprises at least one plasticizer having an iodine value of 100 to 150 g/100 g as measured in accordance with JIS K6235-2006, and
the rubber composition comprises, per 100 parts by mass of at least one rubber component therein, 2 to 20 parts by mass of the at least one plasticizer.

3. The tire according to claim 2,
wherein the plasticizer is at least one liquid resin selected from the group consisting of C5/C9 resins, terpene resins, phenol resins, and aromatic vinyl polymers.

4. The tire according to any one of claims 1 to 3,

wherein the rubber composition comprises, based on 100% by mass of at least one rubber component therein, at least 75% by mass of at least one multi-component copolymer containing a conjugated diene unit, a non-conjugated olefin unit, and an aromatic vinyl unit, and
the multi-component copolymer has a non-conjugated olefin unit content of higher than 65 mol% but lower than 95 mol% and an aromatic vinyl unit content of 4 mol% or higher.

5. The tire according to claim 4,
wherein the multi-component copolymer has a weight average molecular weight of 100,000 to 2,000,000.

6. The tire according to any one of claims 1 to 5,

wherein the rubber composition comprises at least one solid resin, and
the rubber composition comprises, per 100 parts by mass of at least one rubber component therein, 5 to 30 parts by mass of the at least one solid resin.

**7.** The tire according to any one of claims 1 to 6,

wherein the rubber composition comprises at least one carbon black, and
the rubber composition comprises, per 100 parts by mass of at least one rubber component therein, 10 to 50 parts by mass of the at least one carbon black.

**8.** The tire according to any one of claims 1 to 7,
wherein the carbon black comprises a high structure carbon black having a dibutyl phthalate oil absorption of 250 ml/100 g or more and a nitrogen adsorption specific surface area of 350 $m^2$/g or more, when measured in accordance with JIS K6217-4:2001.

**9.** The tire according to any one of claims 1 to 8,

wherein the tire comprises a carcass, a belt disposed radially outward of the carcass, and a belt-reinforcing layer disposed radially outward of the belt;
the tread is disposed radially outward of the belt-reinforcing layer;
the tread has a multi-layer structure including a base tread and a cap tread that comprises the rubber composition;
the cap tread has two or more circumferential grooves and a plurality of land portions defined by the circumferential grooves;
the tire satisfies the following relationship 4) in a center land portion that is closest to a tire equator among the land portions:

$$4) \quad 0.30 \leq (t0 - t1)/t0 \leq 0.40$$

wherein t0 denotes a thickness from the belt-reinforcing layer to an outer surface of the center land portion, and t1 denotes a thickness of a rubber layer that forms the cap tread; and
the tire satisfies the following relationship 5) in a bottom portion that is a deepest part of the circumferential grooves:

$$5) \quad 0.50 \leq t3/t2 \leq 1.00$$

wherein t2 denotes a thickness from the belt-reinforcing layer to an outer surface of the bottom portion, and t3 denotes a thickness of a rubber layer that forms the cap tread.

**Patentansprüche**

**1.** Reifen, umfassend einen Laufstreifen, der eine Kautschukzusammensetzung umfasst,
wobei die Kautschukzusammensetzung den folgenden Verhältnissen 1) bis 3) genügt, wenn innerhalb von 180 Tagen nach Vulkanisation gemessen:

$$1) \quad Hso/Hsa \times 100 \geq 95$$

wobei Hso: Härte bei Raumtemperatur,
Hsa: Härte bei Raumtemperatur nach Wärmebehandlung bei 80°C für 168 Stunden, wenn Hso und Hsa gemäß JIS K6253-3 (2012) "Kautschuk, vulkanisiert oder thermoplastisch - Härtebestimmung - Teil 3: Durometer-Verfahren" unter Verwendung eines Typ-A-Durometers gemessen sind;

$$2) \quad As/Ts \times 100 \leq 70$$

wobei Ts: Schwefelgehalt vor Aceton-Extraktion,
As: Schwefelgehalt nach Aceton-Extraktion, wenn As und Ts gemäß JIS K6233:2016 gemessen sind, wobei die Aceton-Extraktion durchgeführt wird wie im Abschnitt (Schwefelgehalt) der Beschreibung dargelegt; und

## 3) Quellung ≤ 330

wobei Quellung: Toluol-Quellungsindex, wenn Quellung eine Volumenänderung vor und nach Eintauchen einer Probe in Toluol bei 25°C für 24 Stunden ist, wobei die Probe aus dem Laufstreifen ausgeschnitten ist.

2. Reifen nach Anspruch 1,

   wobei die Kautschukzusammensetzung mindestens einen Weichmacher umfasst, der eine Jodzahl von 100 bis 150 g/100 g, wie gemäß JIS K6235-2006 gemessen, aufweist, und
   die Kautschukzusammensetzung, pro 100 Massenteile mindestens einer Kautschukkomponente darin, 2 bis 20 Massenteile des mindestens einen Weichmachers umfasst.

3. Reifen nach Anspruch 2,
   wobei der Weichmacher mindestens ein flüssiges Harz ist, welches ausgewählt ist aus der Gruppe bestehend aus C5/C9-Harzen, Terpenharzen, Phenolharzen und aromatischen Vinylpolymeren.

4. Reifen nach einem der Ansprüche 1 bis 3,

   wobei die Kautschukzusammensetzung, bezogen auf 100 Massen-% mindestens einer Kautschukkomponente darin, mindestens 75 Massen-% mindestens eines Mehrkomponenten-Copolymers umfasst, das eine konjugierte Dien-Einheit, eine nicht-konjugierte Olefin-Einheit und eine aromatische Vinyl-Einheit enthält, und
   das Mehrkomponenten-Copolymer einen Gehalt an nichtkonjugierten Olefin-Einheiten von höher als 65 Mol-%, aber niedriger als 95 Mol-%, und einen Gehalt an aromatischen Vinyl-Einheiten von 4 Mol-% oder höher aufweist.

5. Reifen nach Anspruch 4,
   wobei das Mehrkomponenten-Copolymer ein gewichtsmittleres Molekulargewicht von 100.000 bis 2.000.000 aufweist.

6. Reifen nach einem der Ansprüche 1 bis 5,

   wobei die Kautschukzusammensetzung mindestens ein festes Harz umfasst, und
   die Kautschukzusammensetzung, pro 100 Massenteile mindestens einer Kautschukkomponente darin, 5 bis 30 Massenteile des mindestens einen festen Harzes umfasst.

7. Reifen nach einem der Ansprüche 1 bis 6,

   wobei die Kautschukzusammensetzung mindestens einen Ruß umfasst, und
   die Kautschukzusammensetzung, pro 100 Massenteile mindestens einer Kautschukkomponente darin, 10 bis 50 Massenteile des mindestens einen Rußes umfasst.

8. Reifen nach einem der Ansprüche 1 bis 7,
   wobei der Ruß einen hochstrukturierten Ruß umfasst, der eine Dibutylphthalat-Öl-Absorption von 250 ml/100 g oder mehr und eine spezifische Stickstoffadsorptionsoberfläche von 350 $m^2$/g oder mehr aufweist, wenn gemäß JIS K6217-4:2001 gemessen.

9. Reifen nach einem der Ansprüche 1 bis 8,

   wobei der Reifen eine Karkasse, einen radial außerhalb der Karkasse angeordneten Gürtel und eine radial außerhalb des Gürtels angeordnete Gürtel-verstärkende Schicht umfasst;
   der Laufstreifen radial außerhalb der Gürtel-verstärkenden Schicht angeordnet ist;
   der Laufstreifen eine mehrschichtige Struktur aufweist, die einen Basislaufstreifen und einen Decklaufstreifen enthält, der die Kautschukzusammensetzung umfasst;
   der Decklaufstreifen zwei oder mehr Umfangsrillen und eine Mehrzahl an durch die Umfangsrillen definierten Positivprofilabschnitten aufweist;
   der Reifen in einem Zentrumspositivprofilabschnitt, der von den Positivprofilabschnitten einem Reifenäquator am nächsten ist, dem folgenden Verhältnis 4) genügt:

$$4)\ \ 0{,}30 \le (t0 - t1)/t0 \le 0{,}40$$

wobei t0 eine Dicke von der Gürtel-verstärkenden Schicht zu einer äußeren Oberfläche des Zentrumspositivprofilabschnitts bezeichnet, und t1 eine Dicke einer Kautschukschicht bezeichnet, die den Decklaufstreifen bildet; und

der Reifen in einem Bodenabschnitt, der ein tiefster Teil der Umfangsrillen ist, dem folgenden Verhältnis 5) genügt:

$$5)\ \ 0{,}50 \le t3/t2 \le 1{,}00$$

wobei t2 eine Dicke von der Gürtel-verstärkenden Schicht zu einer äußeren Oberfläche des Bodenabschnitts bezeichnet, und t3 eine Dicke einer Kautschukschicht bezeichnet, die den Decklaufstreifen bildet.

**Revendications**

1. Pneumatique comprenant une bande de roulement comprenant une composition de caoutchouc,

   la composition de caoutchouc satisfaisant les relations suivantes 1) à 3) lors d'une mesure à 180 jours après la vulcanisation :

$$1)\ \ \ Hso/Hsa \times 100 \ge 95$$

   où Hso : dureté à température ambiante,
   Hsa : dureté à température ambiante après un traitement thermique à 80 °C pendant 168 heures, lorsque Hso et Hsa sont mesurées selon la norme JIS K6253-3 (2012) « Caoutchouc vulcanisé ou thermoplastique - Détermination de la dureté- Partie 3 : méthode au duromètre », en utilisant un duromètre de type A ;

$$2)\ \ \ As/Ts \times 100 \le 70$$

   où Ts : teneur en soufre avant extraction à l'acétone,
   As : teneur en soufre après extraction à l'acétone, lorsque As et Ts sont mesurées selon la norme JIS K6233 : 2016, où l'extraction à l'acétone est effectuée comme décrit dans la section (teneur en soufre) de la spécification ; et

$$3)\ \ \ Gonflement \le 330$$

   où le gonflement : indice de gonflement au toluène, lorsque le gonflement est une variation de volume avant et après immersion d'un échantillon dans du toluène à 25 °C pendant 24 heures, l'échantillon étant découpé à partir de la bande de roulement.

2. Pneumatique selon la revendication 1,

   dans lequel la composition de caoutchouc comprend au moins un plastifiant ayant un indice d'iode de 100 à 150 g/100 g tel que mesuré selon la norme JIS K6235-2006, et
   la composition de caoutchouc comprend, pour 100 parties en masse d'au moins un composant de caoutchouc à l'intérieur, de 2 à 20 parties en masse de l'au moins un plastifiant.

3. Pneumatique selon la revendication 2,
   dans lequel le plastifiant est au moins une résine liquide choisie dans le groupe constitué de résines en C5/C9, de résines de terpène, de résines de phénol, et de polymères vinyliques aromatiques.

4. Pneumatique selon l'une quelconque des revendications 1 à 3,

dans lequel la composition de caoutchouc comprend, sur la base de 100 % en masse d'au moins un composant caoutchouc à l'intérieur, au moins 75 % en masse d'au moins un copolymère multi-composants contenant une unité diénique conjuguée, une unité oléfinique non conjuguée, et une unité vinylique aromatique, et le copolymère multi-composants a une teneur en unité oléfinique non conjuguée supérieure à 65 % en moles, mais inférieure à 95 % en moles, et une teneur en unité vinylique aromatique de 4 % en moles ou supérieure.

5. Pneumatique selon la revendication 4,
dans lequel le copolymère multi-composants a une masse moléculaire moyenne en poids de 100 000 à 2 000 000.

6. Pneumatique selon l'une quelconque des revendications 1 à 5,

dans lequel la composition de caoutchouc comprend au moins une résine solide, et
la composition de caoutchouc comprend, pour 100 parties en masse d'au moins un composant caoutchouc à l'intérieur, de 5 à 30 parties en masse d'au moins une résine solide.

7. Pneumatique selon l'une quelconque des revendications 1 à 6,

dans lequel la composition de caoutchouc comprend au moins un noir de carbone, et
la composition de caoutchouc comprend, pour 100 parties en masse d'au moins un composant caoutchouc à l'intérieur, de10 à 50 parties en masse d'au moins un noir de carbone.

8. Pneumatique selon l'une quelconque des revendications 1 à 7,
dans lequel le noir de carbone comprend un noir de carbone de structure élevée ayant une absorption d'huile de dibutyl phtalate de 250 ml/100 g ou supérieure et une surface spécifique par adsorption d'azote de 350 m$^2$/g ou supérieure, lors d'une mesure selon la norme JIS K6217-4 : 2001.

9. Pneumatique selon l'une quelconque des revendications 1 à 8,

dans lequel le pneumatique comprend une carcasse, une ceinture disposée radialement à l'extérieur de la carcasse, et une couche de renforcement de ceinture disposée radialement vers l'extérieur de la ceinture ;
la bande de roulement est disposée radialement à l'extérieur de la couche de renforcement de ceinture ;
la bande de roulement a une structure en multicouches comportant une bande de roulement de base et une bande de roulement de revêtement qui comprend la composition de caoutchouc ;
la bande de roulement de revêtement comporte deux ou plusieurs rainures circonférentielles et une pluralité de parties en contact avec le sol définies par les rainures circonférentielles ;
le pneumatique satisfait la relation suivante 4) dans une partie de contact avec le sol qui est la plus proche de l'équateur du pneumatique parmi les parties de contact avec le sol :

$$4) \quad 0,30 \leq (t0 - t1)/t0 \leq 0,40$$

dans lequel t0 désigne une épaisseur à partir de la couche de renforcement de ceinture jusqu'à une surface extérieure de la partie de contact avec le sol centrale, et t1 désigne une épaisseur d'une couche de caoutchouc qui forme la bande de roulement de revêtement ; et
le pneumatique satisfait la relation suivante 5) dans une partie inférieure qui est la partie la plus profonde des rainures circonférentielles :

$$5) \quad 0,50 \leq t3/t2 \leq 1,00$$

dans lequel t2 désigne une épaisseur à partir de la couche de renforcement de ceinture jusqu'à une surface extérieure de la partie inférieure, et t3 désigne une épaisseur d'une couche de caoutchouc qui forme la bande de roulement de revêtement.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016039005 A

- JP 6173923 B